Europäisches Patentamt

European Patent Office

Office européen des brevets

(19)

(11) Publication number: **0 128 221 B1**

(12) **EUROPEAN PATENT SPECIFICATION**

(45) Date of publication of patent specification: 25.09.91    (51) Int. Cl.5: **G11B 5/52**

(21) Application number: **83903106.9**

(22) Date of filing: **30.09.83**

(86) International application number:
**PCT/JP83/00321**

(87) International publication number:
**WO 84/01464 (12.04.84 84/10)**

(54) **ROTARY HEAD DEVICE WITH FLUID BEARING.**

(30) Priority: **30.09.82 JP 172723/82**

(43) Date of publication of application:
**19.12.84 Bulletin 84/51**

(45) Publication of the grant of the patent:
**25.09.91 Bulletin 91/39**

(84) Designated Contracting States:
**DE FR GB**

(56) References cited:
**EP-A- 0 128 122      DE-A- 3 235 866**
**GB-A- 1 022 391      JP-A- 433 767**
**JP-A- 5 620 830      JP-A- 5 797 920**
**JP-B- 4 113 651      JP-U-52 114 224**
**US-A- 4 346 946**

(73) Proprietor: **MATSUSHITA ELECTRIC INDUSTRI-
AL CO., LTD.**
**1006, Oaza Kadoma**
**Kadoma-shi, Osaka-fu, 571(JP)**

(72) Inventor: **ASADA, Takafumi**
**22-6, Matsugaoka-cho Hirakata-shi**
**Osaka-fu 573(JP)**
Inventor: **YOSHIDA, Cyuryo**
**3-84, Higashi Dori Nishinagasu-cho**
**Amagasaki-shi Hyogo-ken 660(JP)**
Inventor: **SHIOYAMA, Tadao**
**3-606-26, Daifuku Nakatsumichi Sakurai-shi**
**Nara-ken 633(JP)**
Inventor: **HOSOKAWA, Yoshiteru**
**4-8-3, Miyanosaka Hirakata-shi**
**Osaka-fu 573(JP)**

(74) Representative: **Crawford, Andrew Birkby et al**
**A.A. THORNTON & CO. Northumberland**
**House 303-306 High Holborn**
**London WC1V 7LE(GB)**

## Description

TECHNICAL FIELD

The present invention relates to a rotary head device using dynamic pressure type fluid bearing for use in video tape recorders (hereinafter abbreviated to VTR) and provides a rotary head device which is compact and excellent in rotary performance.

BACKGROUND ART

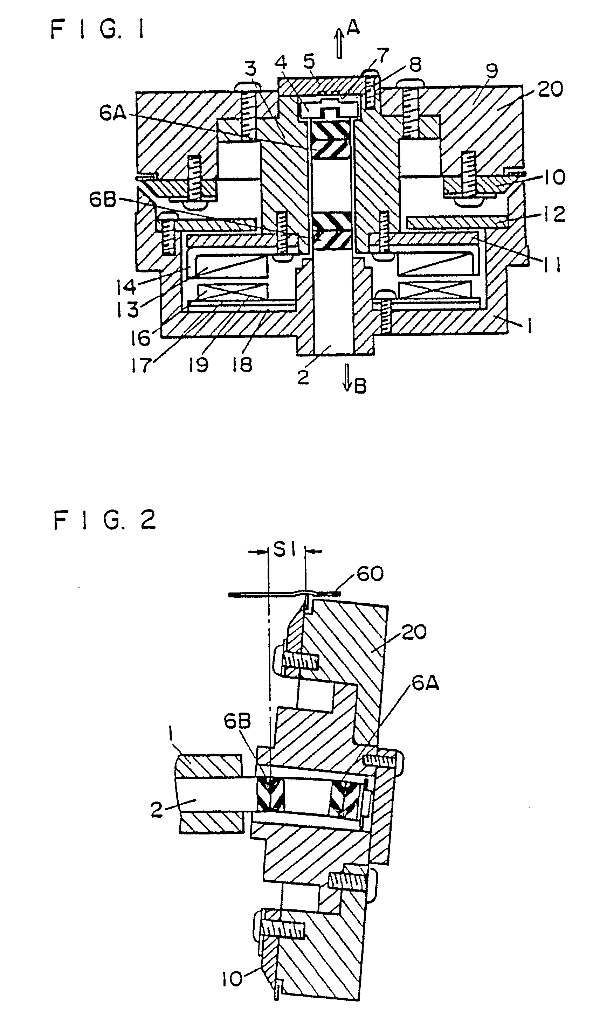

In the conventional fluid bearing cylinder device, with its particular structure as shown in FIG. 1, a fixed shaft 2 is pressed in and secured in place at the central portion of the lower cylinder 1, a sleeve 3 is rotatably put on the fixed shaft 2, on the top of the fixed shaft 2, a thrust bearing seat 4 is screwed and on the upper end of the sleeve 3, a thrust bearing 5 is screwed. On the fixed shaft 2, herringbone shape grooves 6A and 6B and on the lower surface of the thrust bearing 5, a spiral groove 7, respectively, are formed by etching, etc., and in all space inside the bearing chamber formed by the shaft 2 and the sleeve 3, lubricant 8, which is oil or grease, etc., is filled, thereby composing a dynamic pressure type fluid bearing. On the sleeve 3, there are mounted an upper cylinder 9 on which a rotary magnetic head 10 is held, a disc shape rotary transformer 11 on the rotary side for transmitting to the stationary side the electrical signal extracted from the magnetic tape, not shown in the drawings, through the magnetic head 10 and armature magnet 13 and magnet case 14 of the motor, thereby composing rotary side unit 20. On the other hand, on the lower cylinder 1, a rotary transformer 12 on the stationary side which receives the aforementioned electric signal is fixed and inside the lower cylinder 1, there is secured a motor stator 19 consisting of an iron plate 18, printed substrate 17 and coil 16. As the motor is energized under this state, the rotary unit 20 begins turning, producing a pressure by the pumping action of the grooves 6A, 6B and 7; then, the unit is floated up by the rising rigidity of the oil film, thereby enabling the rotation without making contact with the stationary side unit.

However, in such a structure as above-described, the dimension in the axial direction is thick, thus detracting from compactness. When it is tilted sideways by 90 degrees to its horizontal posture, as shown in FIG. 2, the fixed shaft 2 tends to be warped due to the dead weight of the rotary unit and the side pressure by the magnetic tape, causing a large shift SI in the relative position between the magnetic head 10 and the magnetic tape 60. As a consequence, the picture in VTR cannot be reproduced. And for such other reasons, this structure was determined to be unacceptable in its performance as a portable VTR.

US-A-4,346,946 shows a rotary head device according to the first portion of claim 1.

The present invention provides a rotary head device according to the characterising portion of claim 1. A different rotary head device is claimed in the EP-A-128222.

In order that the present invention be more readily understood, an embodiment will now be described by way of example with reference to the accompanying drawings, in which:-

Fig. 1 is a sectional view of a conventional fluid bearing cylinder;

Fig. 2 is a sectional view of the principal part of the same in its horizontal posture;

Fig. 3 is a sectional view of an embodiment of this invention; and

Fig. 4 is a sectional view of the principal part of the fluid bearing cylinder device in its horizontal posture.

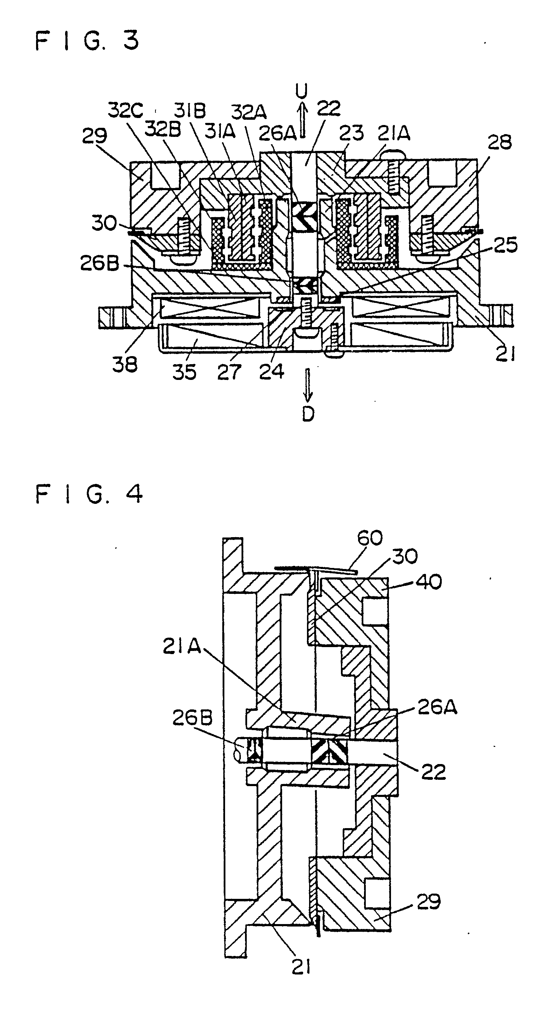

In the following, an embodiment of this invention is described with reference to Figs. 3 and 4. Fig. 3 is a sectional view of a fluid bearing cylinder device embodying this invention. According to Fig. 3, 21 denotes a lower cylinder, which has a sleeve 21A at its center. Numeral 22 designates a rotary shaft turning in the sleeve 21A; 23, disc; 24, thrust bearing member fixed on the bottom surface of the rotary shaft at a right angle thereto; 26A and 26B, herringbone shape grooves 5 ~ 20 micron (hereinafter represented by $\mu$m) formed by etching or machining at positions on the shaft 22 such that the grooves 26A and 26B are within the bore of the sleeve 21A; 27, a spiral groove formed on the thrust bearing member; and in these grooves a lubricant 28A and 28B and having a viscosity of about 20 centipoises and relatively excellent in temperature characteristics is filled in, whereby a dynamic pressure type fluid bearing is composed. Numeral 29 denotes an upper cylinder screwed onto the disc 23, which has a magnetic head 30. Reference codes 31A and 31B denote cylindrical rotary side rotary transformers located on the disc 23 and whose axes are parallel to the axis of the shaft 22, with the transformer 31A being located within the transformer 31B. The inner surface of transformer 31A and the outer surface of transformer 31B are grooved in a manner described in more detail later.

A stationary side rotary transformer is located on the lower cylinder 21 and comprises cylindrical sections 32A and 32B and section 32C. The sections 32A and 32B are spaced apart by a distance sufficient to receive therebetween the rotary side transformers 31A; 31B and the inner walls of the sections 32A, 32B are grooved in conformity to the facing grooves on the rotary side transformers 31A, 31B whereby to transmit to the stationary side the electric signal extracted from the magnetic tape by means of the rotary magnetic head 30. Numeral 24 stands for thrust bearing member which has a groove 27; 35, motor rotor; and 38, motor stator. Numeral 25 designates a hard surface layer.

It will be noted that the stator 38 is mounted on the lower cylinder 21 on the side of the cylinder 21 opposite to that facing the upper cylinder 29. The rotor 35 of the motor is mounted on the lower end of the shaft 22 below the stator 38.

In the following, the operation of this device is described: As the motor is energised, the rotary unit begins turning and is floated up by the pumping action by grooves 26A, 26B and 27 and turned without making contact with the stationary unit.

As above described, the cylinder device is required to be compact and thin for it to be portable. Conventional rotary transformers 11 and 13 shown in Fig. 1 are in disc shapes. At least two such discs each 2 ~ 2.5 millimeter thick are necessary and their thickness occupies approx. 10 ~ 20 percent of the total thickness of the cylinder device. According to this invention, the dimension of the cylinder device as a whole can be made thin by making them cylindrical in shape, as shown in Fig. 3. Besides, in the cylinder device, rotary transformers having a number of channels (corresponding to the number of grooves on the rotary transformer in terms of its configuration) equal to the number of magnetic heads 30 mounted thereon are required; generally 2 ~ 5 channels are necessary. In this device, two types of rotary transformers 31A and 32A differing in number of channels, as 3 channels and 2 channels, are coaxially mounted and through combination of these two types, cylinder devices differing in specifications, for 2, 3 and 5 channels, are to be reasonably produced.

FIG. 4 represents the rotary head device of this invention in the state of being tunred by 90 degrees to its horizontal posture. In the device of this invention, the groove 26A on the upper cylinder 29 side of the herringbone shape grooves formed on the rotary shaft 22 is made larger, and the grooves 26B on the motor side smaller. Accordingly, even when the sleeve 21A of the lower cylinder is warped downward, because of the high oil film rigidity on groove 26A and the low oil film rigidity on 26B, the rotary shaft will not be in parallel with the sleeve, but the tilting of this sleeve 21A is cancelled, so that it turns while keeping parallelism to the lower cylinder. Consequently, as this device is observed as a whole, it may be said, a fluid bearing excellent in angular rigidity has been obtained, in which relative shift between the magnetic tape 60 and the head 30 is small; thus this device has excellent performances for use as portable equipments which are usable at every angle.

## INDUSTRIAL APPLICABILITY

A rotary head device using fluid bearing which is compact and excellent in portability is obtained by making larger the groove on the upper cylinder side, and smaller the groove on the motor side, of the two herringbone shape grooves, and by providing pairs of rotary side and stationary side rotary transformers coaxially with the rotary shaft and this effect is enormous.

## Claims

1. A rotary head device with a fluid bearing (24, 25, 27) at the centre of a lower cylinder (21), a rotary shaft (22) rotatably inserted through said fluid bearing, an upper cylinder (29) affixed to the upper side of the rotary shaft (22) and provided with a head (30), motor means (38) on the lower cylinder (21), two herringbone shape grooves (26A, 26B) formed either on the rotary shaft (22) or on the the lower cylinder (21), and at least one pair of rotary side (31A, 31B) and stationary side (32A, 32B) rotary transformers coaxial with the rotary shaft (22), characterised in that the fluid bearing (24, 25, 27) is formed around a hole at the centre of the lower cylinder (21) through which the rotary shaft (22) passes, in that motor means (38) are mounted on the rotary shaft (22) on the side of the lower cylinder (21) remote from the upper cylinder (29) driven by the motor means (38) on the lower cylinder (21), in that the rotary side (31A, 31B) and stationary side (32A, 32B) transformers are cylindrical, and in that the dimension of the grooves (26A) on the upper cylinder side of the aforementioned two herringbone shape grooves is made larger than of the grooves (26B) on the lower cylinder side.

2. A rotary head device according to claim 1, characterised in that the rotary transformers are a combination of two pairs of transformer sections of different numbers of channels.

## Revendications

1. Dispositif à tête rotative possédant un palier fluide (24, 25, 27) au centre d'un cylindre inférieur (21), un arbre rotatif (22) monté rotatif à travers ledit palier fluide, un cylindre supérieur (29) fixé au côté supérieur de l'arbre rotatif (22) et muni d'une tête (30), des moyens moteurs (38) prévus sur le cylindre inférieur (21), deux rainures en arête de poisson (26A, 26B) formées sur l'arbre rotatif (22) ou sur le cylindre inférieur (21), et au moins une paire de transformateurs rotatifs, de partie rotative (31A, 31B), et de partie fixe (32A, 32B), coaxiaux à l'arbre rotatif (22), caractérisé en ce que le palier fluide (24, 25, 27) est formé autour d'un alésage situé au centre du cylindre inférieur (21), à travers lequel passe l'arbre rotatif (22), en ce que des moyens moteurs (38) sont montés sur l'arbre rotatif (22) sur la face du cylindre inférieur (21) qui est éloignée du cylindre supérieur (21), en ce que les transformateurs de partie rotative (31A, 31B) et de partie fixe (32A, 32B) sont cylindriques et en ce que la dimension des rainures en arête de poisson (26A) proches du cylindre est plus grande que celle des rainures an arête de poisson (26B) proches du cylindre inférieur.

2. Dispositif à tête rotative selon la revendication 1, caractérisé en ce que les transformateurs rotatifs sont constitués par une combinaison de deux paires de sections de transformateurs possédant différents nombres de canaux.

## Patentansprüche

1. Eine Drehkopfvorrichtung mit einem Fluidlager (24, 25, 27) in der Mitte von einem unteren Zylinder (21), einer Drehwelle (22), die drehbar durch das Fluidlager hindurch eingeführt ist, einem oberen Zylinder (29), der an der Oberseite der Drehwelle (22) befestigt und mit einem Kopf (30) versehen ist, einer Motoreinrichtung (38) an dem unteren Zylinder (21), zwei fischgrätenförmigen Rillen (26A, 26B), die entweder auf der Drehwelle (22) oder dem unteren Zylinder (21) gebildet sind, und wenigstens einem Paar von drehungsseitigen (31A, 31B) und stationärseitigen (32A, 32B) Drehumformern koaxial zu der Drehwelle (22), **dadurch gekennzeichnet,** daß das Fluidlager (24, 25, 27) um ein Loch herum in der Mitte des unteren Zylinders (21), durch welches die Drehwelle (22) tritt, gebildet ist, daß die Motoreinrichtung (38) auf der Drehwelle (22) auf der Seite des unteren Zylinders (21), die abgewandt von dem oberen Zylinder (29), der durch die Motoreinrichtung (38) auf dem unteren Zylinder (21) angetrieben wird, ist, montiert ist, daß der drehseitige (31A, 31B) und stationärseitige (32A, 32B) Umformer zylindrisch ist, und daß die Ausdehnung der Rillen (26A) auf der Seite des oberen Zylinders der vorerwähnten zwei fischgrätenförmigen Rillen größer als die Ausdehnung der Rillen (26B) auf der Seite des unteren Zylinders vorgesehen ist.

2. Eine Drehkopfvorrichtung nach Anspruch 1, **dadurch gekennzeichnet,** daß die Drehumformer eine Kombination aus zwei Paaren von Umformersektionen mit unterschiedlichen Anzahlen von Kanälen sind.

F I G. 1

F I G. 2

F I G. 3

F I G. 4